# FASCICULE DE BREVET EUROPEEN

(11) **EP 3 601 055 B1**
(45) Date de publication et mention de la délivrance du brevet: **18.12.2024**
(21) Numéro de dépôt: 18722107.2
(22) Date de dépôt: 29.03.2018
(51) Int. Cl.: B64D 29/06, B64D 29/08, B64C 7/02

(54) **ENSEMBLE PROPULSIF POUR AÉRONEF, RELIÉ AU FUSELAGE DUDIT AÉRONEF**
AN DEN FLUGZEUGRUMPF ANGESCHLOSSENE ANTRIEBSEINHEIT FÜR DAS FLUGZEUG
AIRCRAFT PROPULSION UNIT, CONNECTED TO THE FUSELAGE OF SAID AIRCRAFT

(30) Priorité: 30.03.2017 FR 1752701
(43) Date de publication de la demande: 05.02.2020
(73) Titulaire: Safran Nacelles, 76700 Gonfreville-l'Orcher (FR)
(72) Inventeur: GUILLOIS, Denis, 76700 Gonfreville L'Orcher (FR)
(74) Mandataire: Germain Maureau
(86) Numéro de dépôt international: PCT/FR2018/050788
(87) Numéro de publication internationale: WO 2018/178589

(56) Documents cités:
- EP-A1- 0 596 070
- EP-A1- 1 493 664
- EP-A1- 2 397 410
- FR-A1- 2 926 285
- FR-A1- 3 005 453
- FR-A1- 3 012 114
- FR-A1- 3 025 548
- US-A1- 2013 140 832

## Description

La présente invention concerne une nacelle pour turboréacteur d'aéronef destinée à être reliée au fuselage d'un aéronef et un ensemble propulsif comprenant une telle nacelle.

Un aéronef est mû par plusieurs ensembles propulsifs comprenant chacun un turboréacteur logé dans une nacelle abritant également un ensemble de dispositifs d'actionnement annexes liés à son fonctionnement et assurant diverses fonctions lorsque le turboréacteur est en fonctionnement ou à l'arrêt, tel que par exemple, un dispositif d'inversion de poussée.

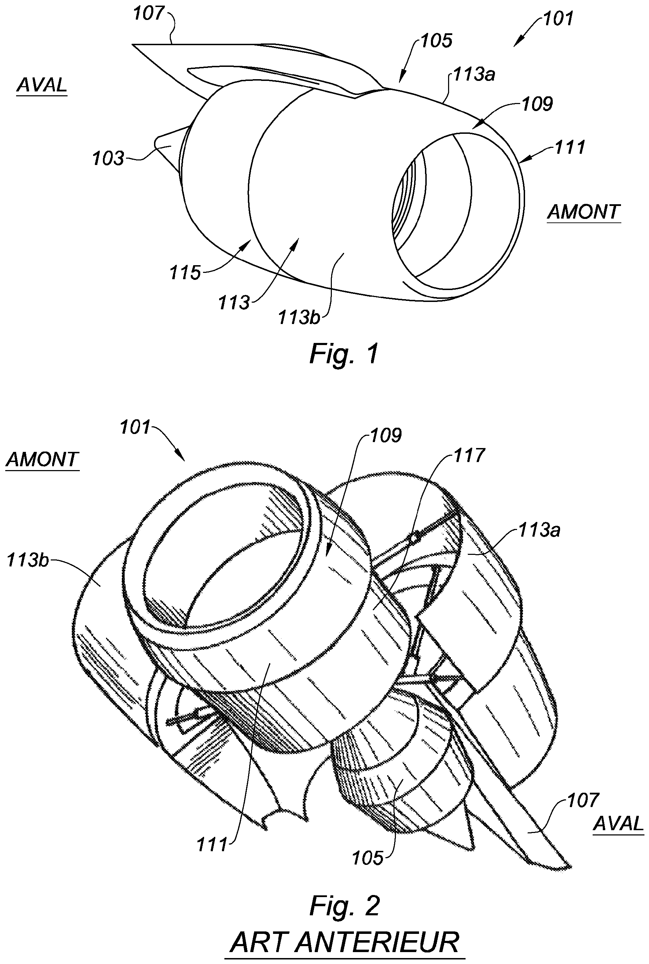

Un premier type d'ensemble propulsif 101 utilisé pour mouvoir un aéronef est représenté à la figure 1. Cet ensemble propulsif 101 comprend un turboréacteur 103 et une nacelle 105, qui reçoit le turboréacteur.

L'ensemble propulsif 101 comporte en outre un pylône vertical 107 destiné à être suspendu sous une aile (non représentée) de l'aéronef, dans une position dite « à 12 heures » de l'ensemble propulsif 101.

La nacelle 105 présente une structure tubulaire comprenant une section amont 109 définissant une entrée d'air 111 en amont du turboréacteur 103, une section médiane 113 destinée à entourer une soufflante du turboréacteur et une section aval 115 pouvant abriter un dispositif d'inversion de poussée et destinée à entourer la chambre de combustion du turboréacteur.

Ce type d'ensemble propulsif, destiné à être supporté par les ailes de l'aéronef, équipe typiquement les avions de type long courrier.

La section médiane 113 de la nacelle 105 comporte en aval de l'entrée d'air 111 deux demi-capots de soufflante 113a, 113b entourant un carter de soufflante 117 (visible à la figure 2) du turboréacteur 103. Chaque demi-capot de soufflante 113a, 113b est sensiblement hémicylindrique. Les demi-capots 113a, 113b définissent, dans une position de fermeture telle que représentée, une continuité aérodynamique entre l'entrée d'air 111 de la section amont 109 de la nacelle 105 et la section aval 115 de la nacelle.

Dans cette position de fermeture, les deux demi-capots de soufflante 113a, 113b sont verrouillés sur une structure fixe ou l'un avec l'autre par un ensemble de verrous, le long d'une ligne de verrouillage longitudinale inférieure, pour ce cas d'utilisation installation motrice sous voilure.

Comme représenté à la figure 2, illustrant l'ensemble propulsif 101 en position de maintenance, les demi-capots de soufflante 113a, 113b peuvent être ouverts radialement par pivotement autour d'une ligne charnière longitudinale supérieure située à proximité d'un axe du pylône 107 auquel est rattachée la nacelle 105, ceci afin de permettre un accès à certains composants du carter de soufflante 117 lors d'opérations de maintenance.

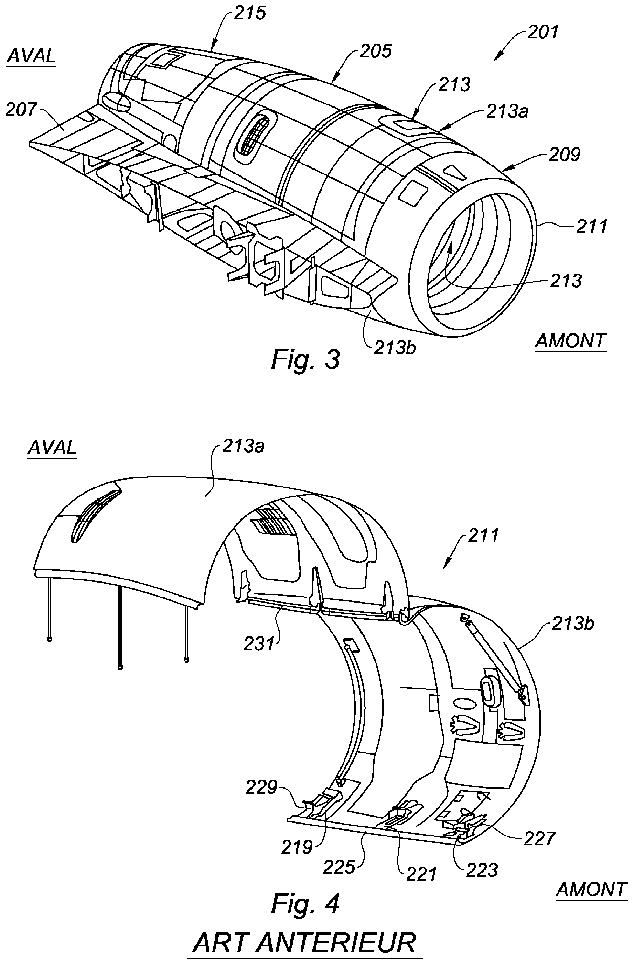

On se réfère à la figure 3 illustrant un deuxième type d'ensemble propulsif 201, destiné à être relié au fuselage de l'aéronef et non aux ailes de l'aéronef, ce type d'ensemble propulsif équipant typiquement les avions de type court et moyen courrier.

Cet ensemble propulsif 1 comprend un turboréacteur 203 et une nacelle 205, qui reçoit le turboréacteur.

L'ensemble propulsif 201 comporte en outre un pylône latéral 207 destiné à être relié directement au fuselage (non représenté) de l'aéronef.

Contrairement au pylône vertical 107 dont il est question aux figures 1 et 2, positionné à 12 heures dans l'ensemble propulsif 101 et destiné à être suspendu sous une aile de l'aéronef, le pylône 207 est destiné à être relié directement au fuselage de l'aéronef. Le pylône 207 est à cet effet positionné « à 9 heures » dans l'ensemble propulsif ou, pour un ensemble propulsif symétrique à l'ensemble propulsif 1 par rapport au fuselage de l'aéronef, positionné « à 3 heures » dans l'ensemble propulsif.

La nacelle 25 présente une structure tubulaire comprenant une section amont 209 définissant une entrée d'air 211 en amont du turboréacteur 203, une section médiane 213 destinée à entourer une soufflante du turboréacteur et le conduit externe du turboréacteur, une section aval 215 pouvant abriter un dispositif d'inversion de poussée, généralement du type à portes.

La section médiane 213 de la nacelle 205 comporte en aval de l'entrée d'air 211 deux demi-capots de soufflante 213a, 213b entourant un carter de soufflante du turboréacteur. Chaque demi-capot de soufflante 213a, 213b est sensiblement hémicylindrique. Les demi-capots 213a, 213b définissent, dans une position de fermeture telle que représentée, une continuité aérodynamique entre l'entrée d'air 211 de la section amont 209 de la nacelle 205 et la section aval 215 de la nacelle.

Afin de pouvoir réaliser des opérations de maintenance du turboréacteur, un des deux demi-capots 213a, 213b est généralement monté mobile entre la position de fermeture représenté à la figure 3 et une position d'ouverture représentée à la figure 4 à laquelle on se réfère à présent, autorisant un accès au turboréacteur.

A la figure 4 est représentée la section médiane 213 de la nacelle 205 de la figure 3. On a ôté de la figure 4 la section amont 209 et la section aval 215 de la nacelle 205, ainsi que le turboréacteur 203 et le pylône 207, pour une meilleure visibilité.

Sur la figure 4, le demi-capot 213a est en position de fermeture et le demi-capot 13b, encore appelé « demi-capot de maintenance 213b », est en position d'ouverture autorisant un accès au turboréacteur (non représenté) pour y réaliser des opérations de maintenance.

Dans l'exemple illustré, seul le demi-capot 213b est monté mobile entre la position de fermeture et la position d'ouverture. Selon une variante de réalisation non représentée, les deux demi-capots 213a, 213b peuvent être montés mobiles entre la position de fermeture et la position d'ouverture.

Le demi-capot de soufflante 213b est maintenu fermé sur le pylône 207 (visible à la figure 3) grâce à un ensemble de verrous de tension 219, 221, 223, disposés le long du demi-capot 213b.

Un joint feu 225 est en outre positionné entre les demi-capots 213a, 213b et le pylône, ceci afin d'éviter qu'un feu déclenché dans l'ensemble propulsif ne se propage dans l'aéronef.

Par ailleurs, un premier verrou de cisaillement 227 est généralement disposé à l'avant du demi-capot mobile 13b. Le verrou de cisaillement 227 est conçu pour fixer le demi-capot 213b sur la section amont 209 de la nacelle.

Un deuxième verrou de cisaillement 229, conçu pour fixer le demi-capot 213b sur la section aval 215 de la nacelle, est également généralement disposé à l'arrière du demi-capot mobile 213b.

Ces verrous de cisaillement 227, 229 sont prévus pour assurer un chemin d'effort en cas de rupture d'un des verrous de tension 219, 221, 223, ceci afin d'éviter un écopage du demi-capot de soufflante en vol, cette situation étant catastrophique.

Le demi-capot de soufflante 213b peut être ouvert radialement par pivotement autour d'une ligne charnière 231, positionnée « à 3 heures », position diamétralement opposée à celle du pylône 207.

Ainsi, lorsque l'on souhaite réaliser des opérations de maintenance sur le turboréacteur, il convient d'ouvrir le demi-capot de soufflante 213b, ceci afin d'accéder au turboréacteur, puis de refermer ce demi-capot une fois la maintenance terminée.

L'ouverture du demi-capot de maintenance 213b est effectuée de la façon suivante.

Un premier opérateur déverrouille les verrous de tension 219, 221, 223 et les verrous de cisaillement 227, 229, qui maintiennent en position de fermeture le demi-capot 13b sur le pylône.

Pendant ce temps, un deuxième opérateur maintient le demi-capot 213b en position de fermeture, ceci afin d'éviter que le demi-capot 213b ne tombe par gravité, sous l'effet de son poids.

La fermeture du demi-capot de maintenance 213b est quant à elle réalisée de la façon suivante.

Le premier opérateur déplace le demi-capot 213b depuis sa position d'ouverture vers sa position de fermeture sur le pylône.

L'opérateur exerce une force élevée sur le demi-capot 213b, afin de comprimer fermement le joint feu 225 sur le pylône.

Le premier opérateur maintient à force le demi-capot 213b dans cette position pendant que le deuxième opérateur vient fermer les verrous de tension 219, 221, 223 sur le pylône, puis les verrous de cisaillement 227, 229, respectivement sur les sections amont et aval de la nacelle.

Ces phases d'ouverture et de fermeture du demi-capot de maintenance 13b présentent plusieurs inconvénients.

Tout d'abord, ces opérations sont fastidieuses et au moins deux opérateurs sont nécessaires, aussi bien pour assurer l'ouverture du demi-capot de maintenance 13b que pour assurer sa fermeture.

En effet, lors d'une phase d'ouverture du demi-capot de maintenance, le premier opérateur déverrouille les verrous de tension et de cisaillement, qui maintiennent le demi-capot de maintenance en position de fermeture, pendant que le deuxième opérateur maintient le demi-capot, afin d'éviter qu'il ne tombe par gravité.

En phase de fermeture du demi-capot de maintenance, le premier opérateur déplace ce demi-capot depuis sa position d'ouverture vers sa position de fermeture.

Lorsque le demi-capot de maintenance se trouve dans sa position de fermeture, cet opérateur doit exercer une pression importante afin d'assurer une bonne compression du joint feu disposé entre le pylône et le demi-capot de maintenance, rendant plus difficile encore cette fermeture du demi-capot, qui a tendance à tombersous l'effet de son poids, pendant que le deuxième opérateur ferme les verrous de tension.

Ensuite, ces opérations d'ouverture et de fermeture du demi-capot de maintenance se révèlent tout particulièrement dangereuses pour les opérateurs.

En effet, l'ensemble propulsif dont il est question aux figures 3 et 4 est destiné à être monté directement sur le fuselage de l'aéronef.

Ainsi, les opérateurs travaillent à hauteur élevée, sur des échelles (alors que lorsque l'ensemble propulsif est suspendu sous l'aile de l'avion, les opérateurs peuvent y accéder sans échelle), rendant alors extrêmement dangereux la manipulation des demi-capots de maintenance, très lourds.

Le document FR3012114 concerne un ensemble propulsif d'aéronef pourvu d'un mechanisme de verrouillage et de fermeture de capots.

Le document FR3025548 concerne un méchanisme de blocage de tige de maintien en position ouverte.

Le document EP0596070 concerne un indicateur de défaut de fermeture de capots.

Le document FR2926285 concerne une nacelle a capotage simplifié. Cette nacelle comprend en outre un capot intermédiaire fixé à un premier capot de manière prendre en sandwich un mât de support d'un turboréacteur. Un deuxième capot est rapporté sur ledit capot intermédiaire par des moyens de fixation démontables.

Le document EP1493664 concerne un dispositif de verrouillage des capots de nacelle d'un turboréacteur.

La présente invention vise à pallier les inconvénients précités, et se rapporte pour ce faire à un ensemble propulsif d'aéronef, comprenant :
- un turboréacteur ;
- un pylône latéral, prévu pour être directement relié au fuselage dudit aéronef, ledit pylône latéral étant positionné à environ 90° ou à environ 270° par rapport à un plan médian sensiblement vertical dudit ensemble propulsif lorsque ledit ensemble propulsif est relié au fuselage de l'aéronef,
- une nacelle montée sur ledit pylône latéral et entourant ledit turboréacteur, comprenant :
   - une section amont, comprenant une entrée d'air de la nacelle ;
   - une section aval, pouvant abriter un dispositif d'inversion de poussée ;
   - une section médiane, en aval de ladite section amont et en amont de ladite section aval, comprenant deux demi-capots de soufflante, entourant un carter de soufflante dudit turboréacteur et étant prévus, lorsque lesdits demi-capots sont dans une position de fermeture, pour définir une continuité aérodynamique entre lesdites sections amont et aval de la nacelle, lesdits demi-capots de soufflante comportant au moins un demi-capot de maintenance positionné sous le plan médian sensiblement horizontal de la nacelle, mobile entre ladite position de fermeture et une position d'ouverture autorisant un accès au turboréacteur pour des opérations de maintenance du turboréacteur ;
ledit ensemble propulsif étant remarquable en ce que ladite nacelle comporte au moins un verrou d'attente, conçu pour maintenir ledit demi-capot de maintenance dans une position intermédiaire auxdites positions de fermeture et d'ouverture.

Ainsi, en équipant la nacelle de l'ensemble propulsif d'un verrou d'attente prévu pour maintenir le demi-capot de maintenance dans une position intermédiaire aux positions de fermeture et d'ouverture, le maintien du demi-capot de maintenance dans une position intermédiaire à la position de fermeture et à la position d'ouverture permet d'éviter que le demi-capot de maintenance ne tombe par gravité, sous l'effet de son poids.

Lorsqu'un opérateur souhaite ouvrir le demi-capot de maintenance afin de réaliser des opérations de maintenance du turboréacteur, cet opérateur positionne le demi-capot de maintenance dans une position d'attente, intermédiaire à la position de fermeture et à la position d'ouverture.

Il peut ensuite déverrouiller lui-même les verrous de tension et de cisaillement, le demi-capot se trouvant maintenu en position d'attente par le verrou d'attente.

Ainsi, grâce à la présente invention, un opérateur unique peut parvenir à ouvrir un tel demi-capot de maintenance, en toute sécurité.

Lorsqu'un opérateur souhaite fermer le demi-capot de maintenance une fois la maintenance du turboréacteur réalisée, cet opérateur déplace le demi-capot depuis sa position s'ouverture vers sa position d'attente, intermédiaire à sa position définitive de fermeture.

Le maintien du demi-capot de maintenance dans cette position d'attente, obtenu grâce au verrou d'attente, permet, d'une part, d'éviter que le capot ne tombe par gravité sous l'effet de son poids lors de la phase de fermeture.

Ainsi, l'opérateur qui a procédé au déplacement du capot depuis sa position d'ouverture vers sa position d'attente peut venir lui-même fermer les verrous de tension, puis les verrous de cisaillement et, d'autre part, de comprimer fermement le joint feu présent entre le pylône et le demi-capot de maintenance.

Ainsi, grâce à la présente invention, un opérateur unique peut parvenir à fermer un tel demi-capot de maintenance, en toute sécurité.

Selon l'invention, la nacelle comprend un dispositif de verrouillage desdits demi-capots en position de fermeture, ledit dispositif de verrouillage comprenant :
- au moins un verrou de tension, conçu pour fixer lesdits demi-capots sur ledit pylône latéral ;
- au moins un verrou de cisaillement, conçu pour fixer lesdits demi-capots sur au moins l'une des sections amont et aval de la nacelle et prévu pour assurer un chemin d'effort en cas de rupture dudit au moins un verrou de tension, ledit verrou de cisaillement comprenant :
   - un pêne de cisaillement, et
   - un réceptacle de cisaillement, monté sur au moins une des sections amont et aval de la nacelle, comprenant une gâche de cisaillement coopérant avec le pêne de cisaillement lorsque lesdits demi-capots sont en position de fermeture ;
   ledit ensemble propulsif étant remarquable en ce que le verrou d'attente de la nacelle comporte :
   - un pêne d'attente, et
   - une gâche d'attente, montée sur le réceptacle de cisaillement, conçue pour coopérer avec ledit pêne d'attente.

Ainsi, en prévoyant de monter la gâche d'attente du verrou d'attente sur le réceptacle de cisaillement du verrou de cisaillement, on parvient à limiter l'espace nécessaire à l'intégration dans la nacelle du verrou d'attente de l'invention. Cette disposition est particulièrement avantageuse dans le cadre de la présente invention où les nacelles sont destinées à être reliées directement au fuselage d'un aéronef et non suspendues sous les ailes de l'aéronef, ces nacelles étant de dimensions largement réduites par rapport aux nacelles suspendues sous les ailes de l'aéronef.

Selon une autre disposition avantageuse de l'ensemble propulsif de l'invention, le pêne d'attente du verrou d'attente est constitué par le pêne de cisaillement du verrou de cisaillement.

Il est ainsi possible d'obtenir grâce à la présente invention une mutualisation complète du verrou d'attente et du verrou de cisaillement. Cette disposition est très intéressante dans l'optique de réduction de l'encombrement à l'intérieur de la nacelle.

Selon d'autres dispositions avantageuses de l'ensemble propulsif de l'invention :
- la distance entre un plan médian sensiblement horizontal de ladite nacelle lorsque ladite nacelle est montée sur le pylône latéral et la gâche d'attente est inférieure à la distance entre ledit plan médian sensiblement horizontal et la gâche de cisaillement ;
- le réceptacle de cisaillement comporte une rampe prévue pour contraindre le pêne d'attente entre une position déployée et une position rétractée lors d'un déplacement du demi-capot de maintenance depuis ladite position d'ouverture vers ladite position de fermeture ;
- la gâche d'attente comporte une gorge définissant un demi-cylindre ;
- le pêne d'attente comporte un axe longitudinal sensiblement parallèle à un axe longitudinal de la nacelle ;
- le réceptacle de cisaillement est fixé sur un cadre arrière de l'entrée d'air de la nacelle ;
- le demi-capot de maintenance est positionné sous le plan médian sensiblement horizontal de ladite nacelle lorsque ladite nacelle est montée sur le pylône latéral.

D'autres caractéristiques et avantages de l'invention apparaîtront à la lecture de la description détaillée qui suit pour la compréhension de laquelle on se reportera aux dessins annexés dans lesquels :
- la figure 1 illustre en vue isométrique un ensemble propulsif de l'art antérieur, en position de fonctionnement, destiné à être suspendu à une aile d'un aéronef ;
- la figure 2 représente l'ensemble propulsif de la figure 1, en position de maintenance ;
- la figure 3 illustre en vue isométrique un ensemble propulsif de l'art antérieur, en position de fonctionnement, destiné à être relié au fuselage d'un aéronef ;
- la figure 4 représente partiellement l'ensemble propulsif de la figure 3, en position de maintenance ;
- la figure 5 illustre en vue isométrique un ensemble propulsif selon l'invention, en position de fonctionnement, destiné à être relié au fuselage d'un aéronef ;
- la figure 6 représente partiellement l'ensemble propulsif de la figure 5, en position de maintenance ;
- la figure 7 est une vue de détail de la zone VII de la figure 5, et illustre la nacelle selon l'invention vue depuis l'intérieur, en position ouverte de maintenance, la vue étant centrée sur la jonction entre la section médiane et la section amont de la nacelle ;
- la figure 8 est une vue similaire à celle de la figure 7, la nacelle étant représentée en position d'attente ;
- la figure 9 est une vue similaire à celles des figures 7 et 8, la nacelle étant représentée en position fermée de fonctionnement.

Dans la description et dans les revendications, les termes « amont » et «aval » doivent s'entendre par rapport à la circulation du flux d'air à l'intérieur de l'ensemble propulsif formé par la nacelle et le turboréacteur.

En outre, sur l'ensemble des figures, des références identiques ou analogues représentent des organes ou ensembles d'organes identiques ou analogues.

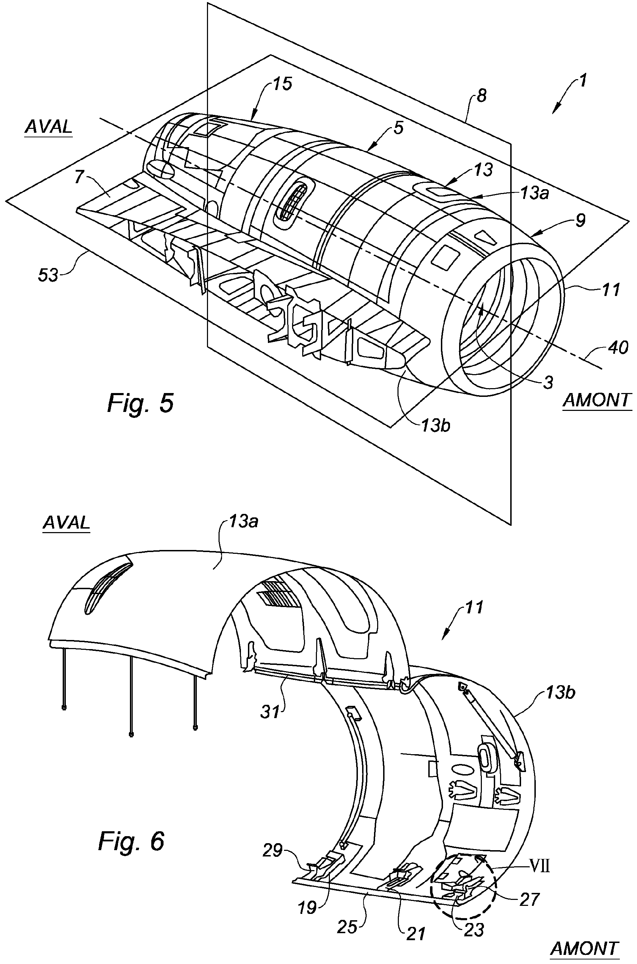

On se réfère à la figure 5, illustrant l'ensemble propulsif 1 selon l'invention, de conception identique à l'ensemble propulsif 201 dont il est question aux figures 3 et 4, c'est-à-dire qu'il s'agit d'un ensemble propulsif destiné à être relié directement au fuselage d'un aéronef, généralement utilisé pour équiper les avions de type court et moyen courrier.

L'ensemble propulsif 1 comprend un turboréacteur 3 et une nacelle 5, qui reçoit le turboréacteur.

L'ensemble propulsif 1 comporte en outre un pylône latéral 7 destiné à être relié directement au fuselage (non représenté) de l'aéronef.

Contrairement au pylône vertical 107 dont il est question aux figures 1 et 2, positionné à 12 heures dans l'ensemble propulsif 101 et destiné à être suspendu sous une aile de l'aéronef, le pylône latéral 7 est destiné à être relié directement au fuselage de l'aéronef. Le pylône 7 est à cet effet positionné « à 9 heures » dans l'ensemble propulsif ou, pour un ensemble propulsif symétrique à l'ensemble propulsif 1 par rapport au fuselage de l'aéronef, positionné « à 3 heures » dans l'ensemble propulsif.

Autrement dit, le pylône latéral 7 est positionné à environ 90° ou à environ 270° par rapport à un plan médian 8 sensiblement vertical de l'ensemble propulsif 1 lorsque l'ensemble propulsif 1 est relié au fuselage de l'aéronef.

La nacelle 5 présente une structure tubulaire comprenant une section amont 9 définissant une entrée d'air 11 en amont du turboréacteur 3, une section médiane 13 destinée à entourer une soufflante du turboréacteur, une section aval 15 pouvant abriter un dispositif d'inversion de poussée, généralement du type à portes, et destinée à entourer la chambre de combustion du turboréacteur.

La section médiane 13 de la nacelle 5 comporte en aval de l'entrée d'air 11 deux demi-capots de soufflante 13a, 13b entourant un carter de soufflante du turboréacteur. Chaque demi-capot de soufflante 13a, 13b est sensiblement hémicylindrique. Les demi-capots 13a, 13b définissent, dans une position de fermeture telle que représentée, une continuité aérodynamique entre l'entrée d'air 11 de la section amont 9 de la nacelle 5 et la section aval 15 de la nacelle.

Afin de pouvoir réaliser des opérations de maintenance du turboréacteur, un des deux demi-capots 13a, 13b est généralement monté mobile entre la position de fermeture représenté à la figure 5 et une position d'ouverture représentée à la figure 6 à laquelle on se réfère à présent, autorisant un accès au turboréacteur.

A la figure 6 est représentée la section médiane 13 de la nacelle 5 de la figure 5. On a ôté de la figure 4 la section amont 9 et la section aval 15 de la nacelle 5, ainsi que le turboréacteur 3 et le pylône 7, pour une meilleure visibilité.

Sur la figure 6, le demi-capot 13a est en position de fermeture et le demi-capot 13b, encore appelé « demi-capot de maintenance 13b », est en position d'ouverture autorisant un accès au turboréacteur (non représenté) pour y réaliser des opérations de maintenance. Le demi-capot de maintenance 13b est positionné sous un plan médian sensiblement horizontal de la nacelle 5, lorsque la nacelle est montée sur le pylône latéral.

Dans l'exemple illustré, seul le demi-capot 13b est monté mobile entre la position de fermeture et la position d'ouverture. Selon une variante de réalisation non représentée, les deux demi-capots 13a, 13b peuvent être montés mobiles entre la position de fermeture et la position d'ouverture.

Le demi-capot de soufflante 13b est maintenu fermé sur le pylône 7 (visible à la figure 3) grâce à un ensemble de verrous de tension 19, 21, 23, disposés le long du demi-capot 13b.

Un joint feu 25 est en outre positionné entre les demi-capots 13a, 13b et le pylône, ceci afin d'éviter qu'un feu déclenché dans l'ensemble propulsif ne se propage dans l'aéronef.

Par ailleurs, un premier verrou de cisaillement 27 est généralement disposé à l'avant du demi-capot mobile 13b. Le verrou de cisaillement 27 est conçu pour fixer le demi-capot 13b sur la section amont 9 de la nacelle.

Un deuxième verrou de cisaillement 29, conçu pour fixer le demi-capot 13b sur la section aval 15 de la nacelle, est également généralement disposé à l'arrière du demi-capot mobile 13b.

Ces verrous de cisaillement 27, 29 sont prévus pour assurer un chemin d'effort en cas de rupture d'un des verrous de tension 19, 21, 23, ceci afin d'éviter un écopage du demi-capot de soufflante en vol, cette situation étant catastrophique.

Le demi-capot de soufflante 13b peut être ouvert radialement par pivotement autour d'une ligne charnière 31, positionnée « à 3 heures », position diamétralement opposée à celle du pylône 7.

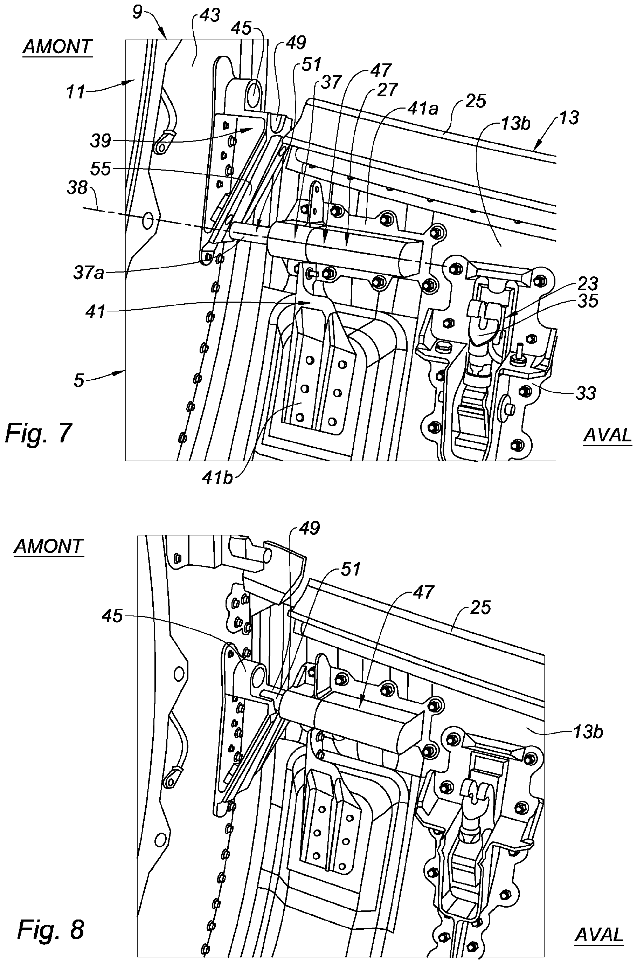

On se réfère à la figure 7, vue de détail de la zone VII de la figure 5 et illustrant la nacelle 5 de l'invention vue depuis son intérieur, en position ouverte de maintenance, la vue étant centrée sur la jonction entre la section médiane 13 et la section amont 9 de la nacelle 5.

Le demi-capot de maintenance 13b reçoit au niveau de sa face interne, c'est-à-dire la face destinée à venir en vis-à-vis du carter de soufflante du turboréacteur, les verrous de tension 19, 21, 23, disposés le long du demi-capot 13b (seul le verrou de tension 23 étant visible à la figure 7), ainsi que les verrous de cisaillement 27, 29 (seul le verrou de cisaillement 27 étant visible à la figure 7).

Le verrou de tension 23 est monté sur une ferrure de support 33 fixée sur la face interne du demi-capot de maintenance 13b.

Le verrou de tension 23 comporte un pêne de tension 35, coopérant avec une gâche de tension (non représentée) pouvant être supportée par le pylône lorsque le demi-capot de maintenance est en position de fermeture.

L'agencement des verrous de tension 19 et 21 sont identiques à celui qui vient d'être décrit pour le verrou de tension 23.

Le verrou de cisaillement 27 assure un verrouillage entre le demi-capot de maintenance 13b et la section amont de la nacelle. Le verrou de cisaillement 27 est positionné en amont du verrou de tension 23 et à proximité de ce dernier.

Le verrou de cisaillement 27 comporte un pêne de cisaillement 37 et un réceptacle de cisaillement 39.

S'agissant du pêne de cisaillement 37, celui-ci est monté sur une ferrure de support 41 fixée sur la face interne du demi-capot de maintenance 13b.

La ferrure de support 41 comporte une première platine de fixation 41a, et une deuxième platine de fixation 41b.

La deuxième platine de fixation 41b est déportée par rapport à la première platine de fixation 41a, ceci d'une part afin de permettre une bonne intégration du verrou de cisaillement 27 dans la nacelle, et d'autre part afin de reprendre les efforts du verrou de cisaillement 27.

Le pêne de cisaillement 37 comporte une portion 37a, mobile entre une position déployée et une position rétractée. La portion mobile 37a adopte par exemple une forme générale cylindrique. L'axe de longitudinal 38 du pêne de cisaillement 37 est sensiblement parallèle à un axe longitudinal 40 de la nacelle (représenté à la figure 5).

S'agissant du réceptacle de cisaillement 39, celui-ci est monté sur un cadre arrière 43 de l'entrée d'air 11 de la section amont 9 de la nacelle.

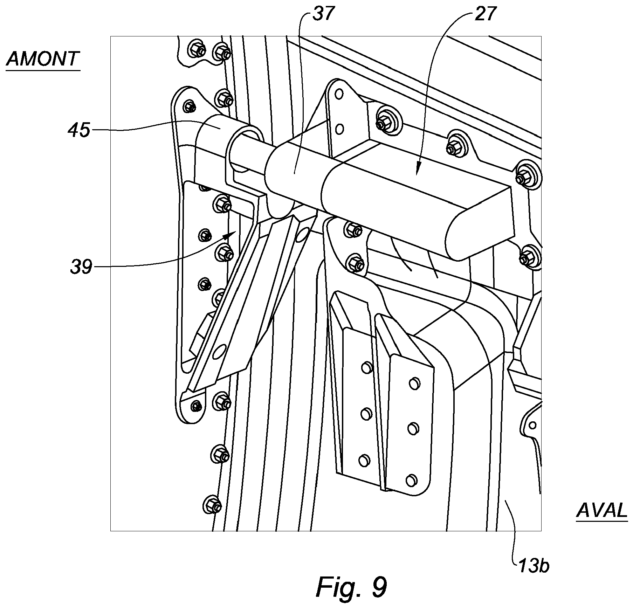

Le réceptacle de cisaillement comporte une gâche de cisaillement 45 qui a vocation à coopérer avec le pêne de cisaillement 37 lorsque le demi-capot de maintenance 13b est en position de fermeture (position représentée à la figure 9).

L'agencement du verrou de cisaillement 29, disposé en partie aval du demi-capot de maintenance 13b et assurant le verrouillage entre le demi-capot de maintenance 13b et la section aval de la nacelle, est identique à celui qui vient d'être décrit pour le verrou de cisaillement 27. Le verrou de cisaillement 29 comporte un pêne de cisaillement monté sur une ferrure de support de conception similaire à la ferrure de support 41, et dont l'agencement vis-à-vis du demi-capot de maintenance est identique à celui décrit pour le verrou de cisaillement 27.

Selon l'invention, la nacelle 5 comporte un verrou d'attente 47. Le verrou d'attente 47 comporte une gâche d'attente 49, conçue pour coopérer avec un pêne d'attente 51 du verrou d'attente 47 lorsque le demi-capot de maintenance se trouve dans une position d'attente représentée à la figure 8, position intermédiaire aux positions d'ouverture de la figure 7 et de fermeture de la figure 9.

Selon une réalisation de l'invention, la gâche d'attente 49 est montée sur le réceptacle de cisaillement 39. La gâche d'attente 49 comporte une gorge, définissant un demi-cylindre.

Il peut toutefois être envisagé de dissocier la gâche d'attente 49 du réceptacle de cisaillement 39, c'est-à-dire de déporter la gâche d'attente par rapport au réceptacle de cisaillement 39.

En tout état de cause, la distance entre un plan médian 53 (visible à la figure 5) sensiblement horizontal de la nacelle 5 lorsque ladite nacelle est montée sur le pylône latéral 7 (visible à la figure 5) et la gâche d'attente 49 est inférieure à la distance entre ledit plan médian sensiblement horizontal et la gâche de cisaillement 45.

Selon une disposition avantageuse de l'invention, le pêne d'attente 51 est constitué par le pêne de cisaillement 37. Il peut toutefois là aussi être envisagé de dissocier le pêne d'attente 51 du pêne de cisaillement 37, c'est-à-dire de déporter le pêne d'attente 51 par rapport au pêne de cisaillement 37.

Le réceptacle de cisaillement 39 comporte une rampe 55, prévue pour contraindre le pêne d'attente 51 entre une position déployée et une position rétractée, lors d'un déplacement du demi-capot de maintenance 13b depuis sa position d'ouverture représentée à la figure 7 vers sa position de fermeture représentée à la figure 9.

Le fonctionnement de l'invention est à présent décrit, en référence aux figures 7 à 9.

Lorsque la nacelle est en fonctionnement, le demi-capot de maintenance 13b se trouve dans la position de fermeture représentée à la figure 9.

Dans cette position, les verrous de tension sont verrouillés sur le pylône et les verrous de cisaillement sont verrouillés sur les sections amont et aval de la nacelle.

S'agissant du verrou de cisaillement 27 visible à la figure 9, celui-ci coopère avec la gâche de cisaillement 45 du réceptacle de cisaillement 39.

Lorsqu'un opérateur souhaite réaliser des opérations de maintenance sur le turboréacteur, il procède au cours d'une première étape au déverrouillage des verrous de tension.

Le demi-capot 13b est maintenu dans la position représentée à la figure 9 grâce au verrou de cisaillement 27, dont le pêne de cisaillement 37 continue de coopérer avec la gâche de cisaillement 45.

Au cours d'une deuxième étape illustrée à la figure 8, il déverrouille le verrou de cisaillement 27 (ainsi que celui se trouvant en aval du demi-capot de maintenance), et il positionne le pêne de cisaillement 37 (pêne d'attente 51 lorsque lesdits pênes sont identiques), de façon à ce qu'il coopère avec la gâche d'attente 49.

Le demi-capot de maintenance 13b ne se trouve alors ni en position de fermeture représentée à la figure 9, ni en position d'ouverture représentée à la figure 7, mais il se trouve dans une position intermédiaire à ces positions, position encore appelée position d'attente.

L'entraxe entre l'axe longitudinal de la gâche de cisaillement 45 et l'axe longitudinal de la gâche d'attente 49 est très faible. Il peut être compris entre 10 millimètres et 20 millimètres, de préférence 15 millimètres, ce qui permet de limiter la force de retenue que l'opérateur doit exercer sur le demi-capot de maintenance 13b lorsqu'il a libérer le pêne de cisaillement 37 de sa gâche de cisaillement 45.

A ce stade, le demi-capot de maintenance n'est alors soutenu que grâce à la coopération du pêne d'attente 51 et de la gâche d'attente 49.

Lorsque l'opérateur est disposé à faire passer le demi-capot de maintenance depuis sa position d'attente représentée à la figure 8 jusqu'à sa position d'ouverture représentée à la figure 7, il libère le pêne d'attente 51 de la gâche d'attente 49.

A l'issue des opérations de maintenance réalisées sur le turboréacteur, lorsqu'un opérateur souhaite fermer le demi-capot de maintenance, il procède, au cours d'une première étape, au déplacement du demi-capot de maintenance depuis sa position d'ouverture représentée à la figure 7 en direction de sa position de fermeture représentée à la figure 9.

Lors de ce déplacement, la rampe 55 du réceptacle de cisaillement 39 entraîne le déplacement du pêne d'attente 51, depuis sa position déployée représentée à la figure 7 jusqu'à sa position rétractée, jusqu'à ce que le pêne d'attente coopère avec sa gâche d'attente 49, position représentée à la figure 8.

Le demi-capot de maintenance 13b ne se trouve alors ni en position d'ouverture représentée à la figure 7 ni en position de fermeture représentée à la figure 9, mais il se trouve dans sa position d'attente, position intermédiaire à ces positions.

Dans une telle position intermédiaire, le capot se trouve pré-contraint par la coopération du pêne d'attente 51 avec la gâche d'attente 49. Le demi-capot de maintenance n'est alors soutenu que grâce à la coopération du pêne d'attente et de la gâche d'attente.

L'opérateur peut ainsi exercer en toute sécurité, c'est-à-dire sans craindre que le demi-capot de maintenance 13b ne tombe par gravité sous l'effet de son poids, exercer une force sur le demi-capot de maintenance 13b, ceci afin de comprimer fermement le joint feu 25 sur le pylône.

L'opérateur ferme alors au cours de cette deuxième étape les verrous de tension, de façon à fixer le demi-capot de maintenance sur le pylône latéral.

Au cours d'une troisième étape, l'opérateur déplace le pêne de cisaillement 37 de façon à ce qu'il coopère avec la gâche de cisaillement 45.

Le demi-capot de maintenance se trouve alors dans sa position de fermeture. Dans cette position, la nacelle est opérationnelle, c'est-à-dire qu'elle ne se trouve plus en phase de maintenance.

## Revendications

1. Ensemble propulsif (1) d'aéronef, comprenant :
- un turboréacteur (3) ;
- un pylône latéral (7), prévu pour être directement relié au fuselage dudit aéronef, ledit pylône latéral étant positionné à environ 90° ou à environ 270° par rapport à un plan médian (8) sensiblement vertical dudit ensemble propulsif lorsque ledit ensemble propulsif est relié au fuselage de l'aéronef,
- une nacelle (5) montée sur ledit pylône latéral (7) et entourant ledit turboréacteur (3), comprenant :
• une section amont (9), comprenant une entrée d'air (11) de la nacelle ;
• une section aval (15), pouvant abriter un dispositif d'inversion de poussée ;
• une section médiane (13), en aval de ladite section amont et en amont de ladite section aval, comprenant deux demi-capots de soufflante (13a, 13b), entourant un carter de soufflante dudit turboréacteur et étant prévus, lorsque lesdits demi-capots sont dans une position de fermeture, pour définir une continuité aérodynamique entre lesdites sections amont et aval de la nacelle, lesdits demi-capots de soufflante comportant au moins un demi-capot de maintenance (13b) positionné sous le plan médian (53) sensiblement horizontal de la nacelle, mobile entre ladite position de fermeture et une position d'ouverture autorisant un accès au turboréacteur pour des opérations de maintenance du turboréacteur ;
ledit ensemble propulsif comporte au moins un verrou d'attente (47), conçu pour maintenir ledit demi-capot de maintenance (13b) dans une position intermédiaire auxdites positions de fermeture et d'ouverture,
dans lequel la nacelle (5) comprend un dispositif de verrouillage des demi-capots (13a, 13b) en position de fermeture, ledit dispositif de verrouillage comprenant :
- au moins un verrou de tension (19, 21, 23), conçu pour fixer lesdits demi-capots (13a, 13b) sur ledit pylône latéral (7) ;
- au moins un verrou de cisaillement (27, 29), conçu pour fixer lesdits demi-capots (13a, 13b) sur au moins l'une des sections amont (9) et aval (15) de la nacelle et prévu pour assurer un chemin d'effort en cas de rupture dudit au moins un verrou de tension (19, 21, 23), ledit verrou de cisaillement comprenant :
• un pêne de cisaillement (37), et
• un réceptacle de cisaillement (39), monté sur au moins une des sections amont (9) et aval (15) de la nacelle, comprenant une gâche de cisaillement (45) coopérant avec le pêne de cisaillement (37) lorsque lesdits demi-capots (13a, 13b) sont en position de fermeture
le verrou d'attente (47) de ladite nacelle (5) comporte :
• un pêne d'attente (51), et
• une gâche d'attente (49), montée sur le réceptacle de cisaillement (39), conçue pour coopérer avec ledit pêne d'attente.

2. Ensemble propulsif (1) selon la revendication 1, où le pêne d'attente (51) du verrou d'attente (47) est constitué par le pêne de cisaillement (37) du verrou de cisaillement (27, 29).

3. Ensemble propulsif (1) selon selon l'une des revendications 1 ou 2, où la distance entre un plan médian (53) sensiblement horizontal de ladite nacelle lorsque ladite nacelle est montée sur le pylône latéral (7) et la gâche d'attente (49) est inférieure à la distance entre ledit plan médian (53) sensiblement horizontal et la gâche de cisaillement (45).

4. Ensemble propulsif (1) selon l'une quelconque des revendications 1 à 3, où le réceptacle de cisaillement (39) comporte une rampe (55) prévue pour contraindre le pêne d'attente (51) entre une position déployée et une position rétractée lors d'un déplacement du demi-capot de maintenance (13b) depuis ladite position d'ouverture vers ladite position de fermeture.

5. Ensemble propulsif (1) selon l'une quelconque des revendications 1 à 4, où la gâche d'attente (49) comporte une gorge définissant un demi-cylindre.

6. Ensemble propulsif (1) selon l'une quelconque des revendications 1 à 5, où le pêne d'attente (51) comporte un axe longitudinal (38) sensiblement parallèle à un axe longitudinal (40) de la nacelle.

7. Ensemble propulsif (1) selon l'une quelconque des revendications 1 à 6, où le réceptacle de cisaillement (39) est fixé sur un cadre arrière (43) de l'entrée d'air (11) de la nacelle.

8. Ensemble propulsif (1) selon l'une quelconque des revendications 1 à 7, où le demi-capot de maintenance (13b) est positionné sous le plan médian (53) sensiblement horizontal de ladite nacelle lorsque ladite nacelle est montée sur le pylône latéral (7).

## Patentansprüche

1. Flugzeugantriebseinheit (1), die Folgendes umfasst:
- ein Turbostrahltriebwerk (3);
- einen seitlichen Pylon (7), der so vorgesehen ist, dass er direkt mit dem Rumpf des Flugzeugs verbunden ist, wobei der seitliche Pylon in einem Winkel von etwa 90° oder etwa 270° im Verhältnis zu einer im Wesentlichen vertikalen Mittelebene (8) der Antriebseinheit positioniert ist, wenn die Antriebseinheit mit dem Rumpf des Flugzeugs verbunden ist,
- eine Gondel (5), die am seitlichen Pylon (7) montiert ist und das Turbostrahltriebwerk (3) umgibt und Folgendes umfasst:
• einen stromaufwärtigen Abschnitt (9), der einen Lufteinlass (11) der Gondel umfasst;
• einen stromabwärtigen Abschnitt (15), der eine Schubumkehrvorrichtung aufnehmen kann;
• einen mittleren Abschnitt (13), der stromabwärts des stromaufwärtigen Abschnitts und stromaufwärts des stromabwärtigen Abschnitts liegt und zwei Bläserhalbverkleidungen (13a, 13b) umfasst, die ein Bläsergehäuse des Turbostrahltriebwerks umgeben, um eine aerodynamische Kontinuität zwischen dem stromaufwärtigen und dem stromabwärtigen Abschnitt der Gondel zu definieren, wobei die Bläserhalbverkleidungen mindestens eine Wartungshalbverkleidung (13b) umfassen, die unter der im Wesentlichen horizontalen Mittelebene (53) der Gondel positioniert und zwischen der geschlossenen Position und einer offenen Position, die einen Zugriff auf das Turbostrahltriebwerk für Wartungsarbeiten am Turbostrahltriebwerk ermöglicht, beweglich ist;
wobei die Antriebseinheit mindestens einen Standby-Riegel (47) umfasst, der dazu ausgebildet ist, die Wartungshalbverkleidung (13b) in einer Zwischenposition zwischen der geschlossenen und der offenen Position zu halten,
wobei die Gondel (5) eine Vorrichtung zum Verriegeln der Halbverkleidungen (13a, 13b) in der geschlossenen Position umfasst, wobei die Verriegelungsvorrichtung Folgendes umfasst:
- mindestens einen Spannriegel (19, 21, 23), der dazu ausgebildet ist, die Halbverkleidungen (13a, 13b) am seitlichen Pylon (7) zu fixieren;
- mindestens einen Scherriegel (27, 29), der dazu ausgebildet ist, die Halbverkleidungen (13a, 13b) auf mindestens einem von dem stromaufwärtigen (9) und dem stromabwärtigen Abschnitt (15) der Gondel zu fixieren, und dazu vorgesehen ist, um im Falle eines Bruchs des mindestens eines Spannriegels (19, 21, 23) einen Lastpfad zu gewährleisten, wobei der mindestens eine Scherriegel Folgendes umfasst:
• einen Scherbolzen (37), und
• eine Scheraufnahme (39), die an mindestens einem von dem stromaufwärtigen (9) und dem stromabwärtigen Abschnitt (15) der Gondel montiert ist und ein Scherschließblech (45) umfasst, das mit dem Scherbolzen (37) zusammenwirkt, wenn sich die Halbverkleidungen (13a, 13b) in der geschlossenen Position befinden,
wobei der Standby-Riegel (47) der Gondel (5) Folgendes umfasst:
• einen Standby-Bolzen (51), und
• ein Standby-Schließblech (49), das an der Scheraufnahme (39) montiert und dazu ausgebildet ist, mit dem Standby-Bolzen zusammenzuwirken.

2. Antriebseinheit (1) nach Anspruch 1, wobei der Standby-Bolzen (51) des Standby-Riegels (47) durch den Scherbolzen (37) des Scherbolzens (27, 29) gebildet wird.

3. Antriebseinheit (1) nach einem der Ansprüche 1 oder 2, wobei der Abstand zwischen einer im Wesentlichen horizontalen Mittelebene (53) der Gondel, wenn die Gondel am seitlichen Pylon (7) montiert ist, und dem Standby-Schließblech (49) kleiner ist als der Abstand zwischen der im Wesentlichen horizontalen Mittelebene (53) und dem Scherschließblech (45).

4. Antriebseinheit (1) nach einem der Ansprüche 1 bis 3, wobei die Scheraufnahme (39) eine Rampe (55) umfasst, die dazu vorgesehen ist, den Standby-Bolzen (51) während einer Verschiebung der Wartungshalbverkleidung (13b) von der offenen Position in die geschlossene Position zwischen eine ausgefahrene Position und eine eingefahrene Position zu zwingen.

5. Antriebseinheit (1) nach einem der Ansprüche 1 bis 4, wobei das Standby-Schließblech (49) eine Nut umfasst, die einen Halbzylinder definiert.

6. Antriebseinheit (1) nach einem der Ansprüche 1 bis 5, wobei der Standby-Bolzen (51) eine Längsachse (38) enthält, die im Wesentlichen parallel zu einer Längsachse (40) der Gondel verläuft.

7. Antriebseinheit (1) nach einem der Ansprüche 1 bis 6, wobei die Scheraufnahme (39) an einem hinteren Rahmen (43) des Lufteinlasses (11) der Gondel befestigt ist.

8. Antriebseinheit (1) nach einem der Ansprüche 1 bis 7, wobei die Wartungshalbverkleidung (13b) unter der im Wesentlichen horizontalen Mittelebene (53) der Gondel positioniert ist, wenn die Gondel am seitlichen Pylon (7) montiert ist.

## Claims

1. An aircraft propulsion unit (1), comprising:
- a turbojet engine (3);
- a lateral mast (7), intended to be directly connected to the fuselage of said aircraft, said lateral mast being positioned at about 90° or at about 270° with respect to a substantially vertical midplane (8) of said propulsion unit when said propulsion unit is connected to the fuselage of the aircraft,
- a nacelle (5) mounted on said lateral mast (7) and surrounding said turbojet engine (3), comprising:
• an upstream section (9), comprising an air inlet (11) of the nacelle;
• a downstream section (15), which can accommodate a thrust reverser device;
• a middle section (13), downstream of said upstream section and upstream of said downstream section, comprising two fan half-cowls (13a, 13b), surrounding a fan casing of said turbojet engine and being intended, when said half-cowls are in a closure position, to define an aerodynamic continuity between said upstream and downstream sections of the nacelle, said fan half-cowls including at least one maintenance half-cowl (13b) positioned under the substantially horizontal midplane (53) of the nacelle, movable between said closure position and an opening position enabling access to the turbojet engine for maintenance operations on the turbojet engine;
said propulsion unit includes at least one standby lock (47), designed to hold said maintenance half-cowl (13b) in an intermediate position between said closure and opening positions,
wherein the nacelle (5) comprises a device for locking the half-cowls (13a, 13b) in the closure position, said locking device comprising:
- at least one tension lock (19, 21, 23), designed to fasten said half-cowls (13a, 13b) on said lateral mast (7);
- at least one shear lock (27, 29), designed to fasten said half-cowls (13a, 13b) on at least one of the upstream (9) and downstream (15) sections of the nacelle and intended to ensure a force path in case of breakage of said at least one tension lock (19, 21, 23), said shear lock comprising:
• a shear pin (37), and
• a shear receptacle (39), mounted on at least one of the upstream (9) and downstream (15) sections of the nacelle, comprising a shear latch (45) cooperating with the shear pin (37) when said half-cowls (13a, 13b) are in the closure position;
the standby lock (47) of said nacelle (5) includes:
• a standby pin (51), and
• a standby latch (49), mounted on the shear receptacle (39), designed to cooperate with said standby pin.

2. The propulsion unit (1) according to claim 1, wherein the standby pin (51) of the standby lock (47) is constituted by the shear pin (37) of the shear lock (27, 29).

3. The propulsion unit (1) according to any of claims 1 or 2, wherein the distance between a substantially horizontal midplane (53) of said nacelle when said nacelle is mounted on the lateral mast (7) and the standby latch (49) is smaller than the distance between said substantially horizontal midplane (53) and the shear latch (45).

4. The propulsion unit (1) according to any one of claims 1 to 3, wherein the shear receptacle (39) includes a ramp (55) intended to constrain the standby pin (51) between a deployed position and a retracted position during a displacement of the maintenance half-cowl (13b) from said opening position towards said closure position.

5. The propulsion unit (1) according to any one of claims 1 to 4, wherein the standby latch (49) includes a groove defining a hemicylinder.

6. The propulsion unit (1) according to any one of claims 1 to 5, wherein the standby pin (51) includes a longitudinal axis (38) substantially parallel to a longitudinal axis (40) of the nacelle.

7. The propulsion unit (1) according to any one of claims 1 to 6, wherein the shear receptacle (39) is fastened on a rear frame (43) of the air inlet (11) of the nacelle.

8. The propulsion unit (1) according to any one of claims 1 to 7, wherein the maintenance half-cowl (13b) is positioned under the substantially horizontal midplane (53) of said nacelle when said nacelle is mounted on the lateral mast (7).
